# EUROPEAN PATENT SPECIFICATION

(11) **EP 4 231 267 B1**
(45) Date of publication and mention of the grant of the patent: **17.07.2024**
(21) Application number: 22888631.3
(22) Date of filing: 15.12.2022
(51) Int. Cl.: H04W 4/02, G06F 18/25, G10L 15/26, G08G 1/133, G08G 1/005, G08G 1/00

(54) **TRANSPORTATION VEHICLE TYPE IDENTIFICATION METHOD AND APPARATUS**
VERFAHREN UND VORRICHTUNG ZUR IDENTIFIZIERUNG DES TRANSPORTFAHRZEUGTYPS
PROCÉDÉ ET APPAREIL D'IDENTIFICATION DE TYPE DE VÉHICULE DE TRANSPORT

(30) Priority: 05.01.2022 CN 202210006782
(43) Date of publication of application: 23.08.2023
(73) Proprietor: Honor Device Co., Ltd., Shenzhen, Guangdong 518040 (CN)
(72) Inventor: DI, Haoxuan, Shenzhen, Guangdong 518040 (CN); GUO, Junlong, Shenzhen, Guangdong 518040 (CN); LI, Danhong, Shenzhen, Guangdong 518040 (CN); ZHANG, Xiaowu, Shenzhen, Guangdong 518040 (CN)
(74) Representative: Isarpatent
(86) International application number: PCT/CN2022/139339
(87) International publication number: WO 2023/130934

(56) References cited:
- WO-A1-2021/237812
- CN-A- 106 713 633
- CN-A- 107 169 525
- CN-A- 107 315 519
- CN-A- 107 396 306
- CN-A- 108 196 998
- CN-A- 108 711 429
- CN-A- 109 547 624
- CN-A- 109 547 624
- CN-A- 110 516 760
- CN-A- 110 516 760
- CN-A- 111 405 114
- CN-A- 111 427 754
- US-A1- 2015 148 984

## Description

### TECHNICAL FIELD

This application relates to the field of data processing technologies, and in particular, to a transportation means identification method and an electronic device.

### BACKGROUND

Currently, a user may move to a target position in a manner such as walking, running, cycling, and riding, and a user's way of travelling may be identified through an electronic device carried by the user. The electronic device may acquire a speed and location information, for example, global positioning system (Global Positioning System, GPS) information. The electronic device identifies the user's way of travelling based on the speed and the location information. The user may ride at least one of a metro, a high-speed railway, a bus, and a car. However, a category of a riding tool cannot be identified based on the speed and the location information.

CN 110 516 760 A discloses a context recognition method and device, a terminal and a computer readable storage medium.

CN 107 315 519 A discloses an OS switching method in a driving state and a device and a mobile terminal.

CN 109 547 624 A discloses a motion state detection method and a device.

### SUMMARY

This application provides a transportation means identification method and an electronic device, as defined in the appended set of claims, to resolve a problem that an electronic device cannot identify a category of a transportation means based on a speed and location information.

### BRIEF DESCRIPTION OF DRAWINGS

FIG. 1 is a schematic diagram of a metro travel scenario according to this application;
FIG. 2 is a diagram of a hardware structure of an electronic device according to this application;
FIG. 3 is an architectural diagram of software and hardware of an electronic device according to this application;
FIG. 4A to FIG. 4C is a timing diagram of a riding tool identification method according to Embodiment 1 of this application;
FIG. 5 is a schematic diagram of a riding tool identification method according to this application;
FIG. 6 is a schematic diagram of detecting a riding state according to this application;
FIG. 7 is a schematic diagram of obtaining a riding classification score according to this application;
FIG. 8 is a schematic diagram of detecting a voice broadcast according to this application;
FIG. 9 is a schematic diagram of identifying a riding tool according to this application;
FIG. 10 is a schematic diagram of a riding tool identification method according to Embodiment 2 of this application; and
FIG. 11 is a schematic diagram of a riding tool identification method according to Embodiment 3 of this application.

### DESCRIPTION OF EMBODIMENTS

The following clearly and completely describes technical solutions in embodiments of this application with reference to the accompanying drawings in the embodiments of this application. Terms used in the following embodiments are only intended to describe particular embodiments, and are not intended to limit this application. As used in this specification and the claims of this application, a singular expression form, "one", "a", "the", "foregoing", "said", or "this", is intended to also include "one or more" expression form, unless clearly indicated to the contrary in the context. It should be further understood that, in the embodiments of this application, "at least one" means one, two, or more than two. The term "and/or" describes an association relationship between associated objects and represents that three relationships may exist. For example, A and/or B may represent: only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" in different parts of this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

A plurality of involved in the embodiments of this application refers to two or more. It is to be noted that, in descriptions of the embodiments of this application, terms such as "first" and "second" are merely used for distinguishing descriptions, and cannot be understood as an indication or implication of relative importance, or an indication or implication of a sequence.

In this embodiment, a transportation means, also referred to as riding tool in the description, may include: a metro, a high-speed railway, a bus, a car, and the like. A user may select a riding tool for travelling. For example, the user may choose to travel by a metro, and after the metro arrives at a station, the user may scan a ride code to get off the station. In this case, an electronic device may enable an arrival ride code push function. After it is identified that the user takes a metro and it is detected that the metro arrives at the station, a metro ride code is pushed. The arrival refers to arrival at a destination.

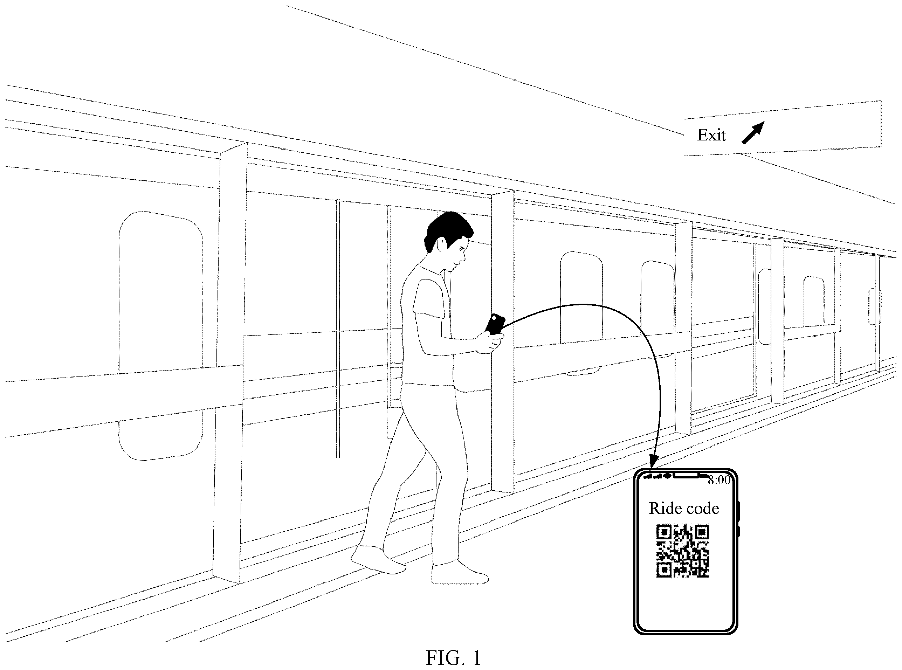

In a metro travel scenario shown in FIG. 1, the user may enable the arrival ride code push function before metro travel. For example, the user opens a setting interface of the electronic device, finds a "arrival ride code push" setting option from the setting interface, and enables the "arrival ride code push" setting option. In this way, the electronic device enables the arrival ride code push function. During travelling, the electronic device may identify a user's way of travelling, and may further identify whether the user takes a metro. When identifying that the user travels by a metro, the electronic device may push a metro ride code after detecting that the metro arrives at a station.

In an example, the electronic device may obtain a speed and location information, identify a user's way of travelling based on the speed and the location information, and may further identify whether the riding tool is a metro or not based on the speed and the location information. For example, when a category of the riding tool is a metro, the location information is location information related to a metro station, and a speed of the metro is different from that of another riding tool. Therefore, the electronic device may identify that a category of the riding tool is a metro on the basis that the speed matches the speed of the metro, and the location information is location information related to the metro station. When identifying that the category of the riding tool is a metro, the electronic device may detect whether the metro arrives at a station, and may push a metro ride code if it is detected that the metro arrives at the station. The speed of the metro may include: an acceleration, a deceleration, and a speed of the metro in a stable state, where the stable state means that the metro is in a state of a uniform speed or close to a uniform speed.

However, the electronic device may identify a single metro travel scenario based on the speed and the location information, but scenarios of a high-speed railway, a bus, a car, and the like are not identified, that is, an identification function is single, and riding tools such as a metro, a high-speed railway, a bus, and a car are not distinguished. In addition, a bus ride code can be used on the bus. Since the bus is not identified, the bus ride code cannot be pushed after the bus arrives at a station.

In view of the foregoing problems, this application provides a riding tool identification method, to identify, based on an acceleration signal, a base station signal, and a magnetometer signal, that riding tools are a metro, a high-speed railway, a bus&car (where & indicates that the bus and the car are not distinguished), and an unknown category. The "unknown category" indicates that a category of the riding tool is not identified or a way of travelling other than riding the metro, the high-speed railway, the bus, and the car is identified. For example, one of ways of travelling such as cycling, walking, and running is identified. A metro and a bus are identified based on voice signals (for example, a vehicle arrival broadcast) during ride. In this way, a metro, a high-speed railway, a bus, a car, and an unknown category are identified based on the acceleration signal, the base station signal, the magnetometer signal, and the voice signal, so that the identification function is improved, and a category of the riding tool during user travelling can be identified, for example, a metro, a high-speed railway, a bus, and a car are distinguished. In addition, the electronic device can identify ride of a bus, and can push a bus ride code after the bus arrives at the station, to improve accuracy and timeliness of pushing a ride code, thereby improving user experience.

Further, the riding tool identification method may further include: detecting a riding state, and identifying, in a case that a riding state is detected, a category of the riding tool based on the acceleration signal, the base station signal, the magnetometer signal, and the voice signal; and continuing to detect a riding state if a non-riding state is detected. In this way, the identification function is further improved, and a category of the riding tool is identified in the riding state, so that identification of a category of the riding tool in the non-riding state is omitted, thereby reducing power consumption. In an example, the riding state is detected based on the acceleration signal and the base station signal.

In this embodiment, the riding tool identification method is applicable to an electronic device. In some embodiments, the electronic device may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a smart watch, or the like. A specific form of the electronic device is not limited in this embodiment of this application.

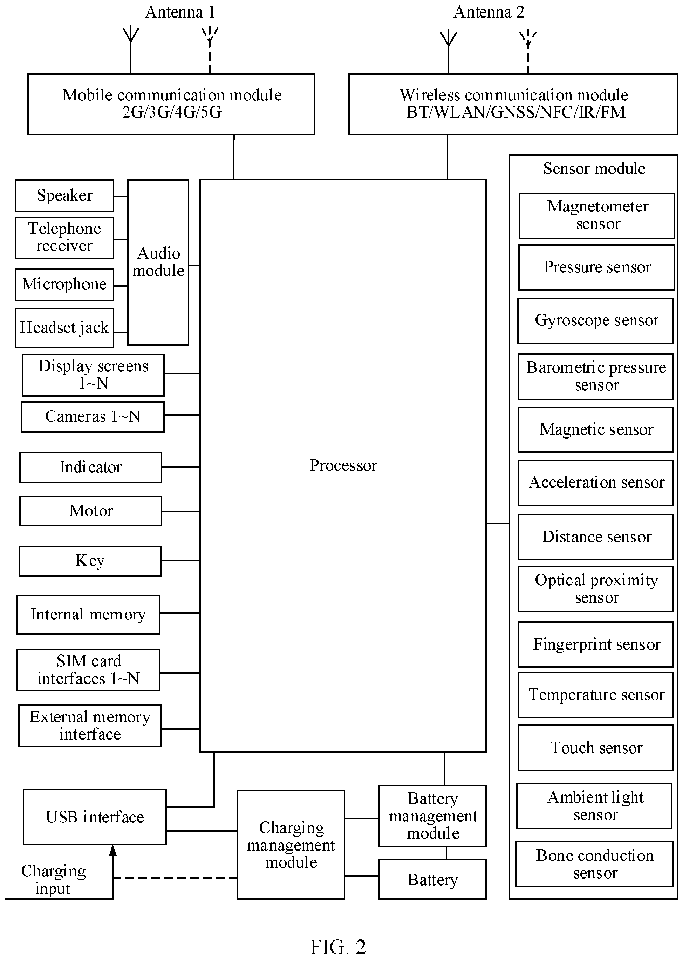

As shown in FIG. 2, the electronic device may include a processor, an external memory interface, an internal memory, a universal serial bus (universal serial bus, USB) interface, a charging management module, a power management module, a battery, an antenna 1, an antenna 2, a mobile communication module, a wireless communication module, a sensor module, a key, a motor, an indicator, a camera, a display screen, a subscriber identification module (subscriber identification module, SIM) card interface, and the like. An audio module may include a speaker, a phone receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, and a touch sensor, an ambient light sensor, a bone conduction sensor, a magnetometer sensor, and the like.

It may be understood that the schematic structure in this embodiment constitutes no specific limitation on the electronic device. In some other embodiments, the electronic device may include more or fewer components than those shown in the figure, or some components may be combined, or some components may be split, or components are arranged in different manners. The components in the portrait may be implemented by hardware, software, or a combination of software and hardware.

The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be separate devices, or may be integrated into one or more processors. The processor is a nerve center and a command center of the electronic device. The controller may generate an operation control signal according to an instruction operation code and a timing signal, to complete control of fetching and executing instructions.

The display screen is configured to display images, videos, a series of graphical user interfaces (Graphical User Interfaces, GUIs), and the like, for example, display a setting interface, a metro ride code, a bus ride code, and the like.

The external memory interface may be configured to be connected to an external storage card, for example, a micro SD card, to expand a storage capability of the electronic device. The external storage card communicates with the processor through the external memory interface, to implement a data storage function, for example, storing a file such as configuration information of a network in the external storage card. The internal memory may be configured to store computer executable program code, and the executable program code includes instructions. The processor runs the instructions stored in the internal memory, to perform various function applications and data processing of the electronic device. For example, in this application, the processor runs the instructions stored in the internal memory, so that the electronic device perform the riding tool identification method provided in this application.

The antenna 1 and the antenna 2 are configured to transmit and receive electromagnetic wave signals. Each antenna in the electronic device may be configured to cover one or more communication frequency bands. Different antennas may be multiplexed to improve antenna utilization. For example, the antenna 1 may be multiplexed into a diversity antenna of a wireless local area network. In some other embodiments, the antennas may be used with a tuning switch. The mobile communication module may provide a solution to wireless communication such as 2G/3G/4G/5G applied to the electronic device. The mobile communication module may receive an electromagnetic wave through the antenna 1, perform processing such as filtering and amplification on the received electromagnetic wave, and transmit a processed electromagnetic wave to the modem processor for demodulation. The mobile communication module may further amplify a signal modulated by the modem processor, and convert the signal into an electromagnetic wave for radiation through the antenna 1. In some embodiments, at least some functional modules of the mobile communication module may be disposed in the processor. In some embodiments, at least some functional modules of the mobile communication module and at least some modules of the processor may be disposed in the same device. For example, the modem processor may be configured in the mobile communication module. Abase station signal is acquired through the modem processor.

The acceleration sensor can acquire an acceleration signal. The acceleration signal represents magnitude of accelerations in various directions (generally on three axes) of the electronic device. The magnetometer sensor can acquire a magnetometer signal. The magnetometer signal represents strength of a magnetic field where the electronic device is located, and a fluctuation of a geomagnetic amplitude can be obtained based on magnetometer signals acquired at different time points.

In addition, an operating system runs on the foregoing components, for example, an iOS operating system developed by Apple Inc., an Android open-source operating system developed by Google Inc., or a Windows operating system developed by Microsoft. An application may be installed and run on the operating system.

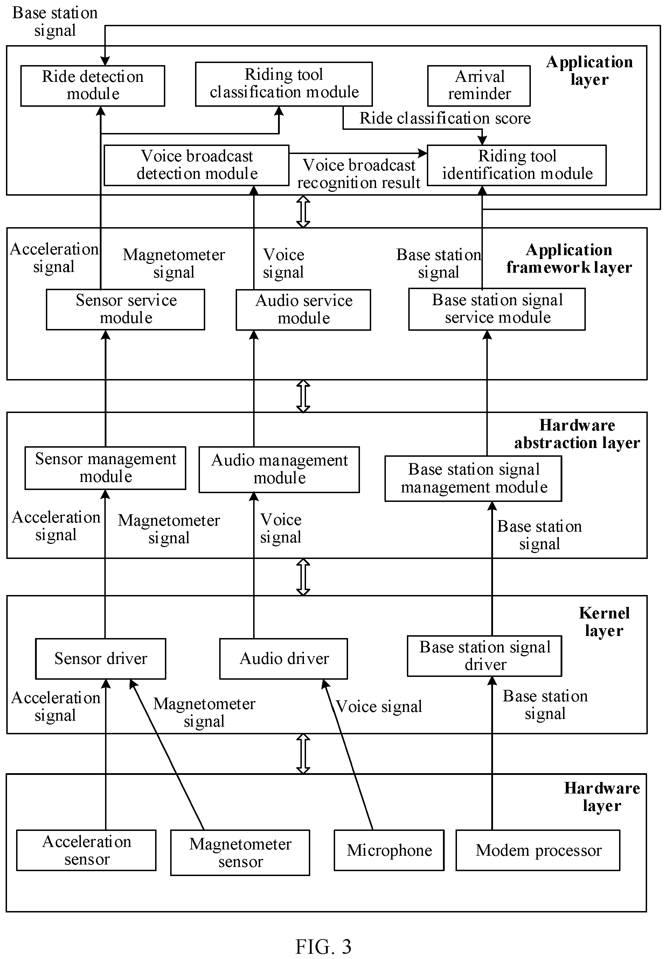

An operating system of the electronic device may use a layered architecture, an event-driven architecture, a micro core architecture, a micro service architecture, or a cloud architecture. In this embodiment of this application, the software structure of the electronic device is illustrated by using an Android system with a layered architecture as an example. FIG. 3 is a block diagram of software and hardware structures of an electronic device. The software structure uses a layered architecture. In the layered architecture, software is divided into several layers, and each layer has a clear role and task. Layers communicate with each other through software interfaces. An Android operating system is used as an example. In some embodiments, the Android system is divided into four layers: an application layer, an application framework layer (framework), a hardware abstraction layer (HAL), and a system kernel layer (kernel) from top to bottom.

The application layer may include a series of application packages. As shown in FIG. 3, the application package may include an arrival reminder APP, and the application layer may further include: a ride detection module, a riding tool classification module, a voice broadcast detection module, and a riding tool identification module. The ride detection module is configured to detect a riding state. The riding tool classification module is configured to identify a metro, a high-speed railway, a bus&car (where & indicates that the bus and the car are not distinguished), and an unknown category. The voice broadcast detection module is configured to identify a metro and a bus. The riding tool identification module is configured to identify a metro, a high-speed railway, a bus, a car, and an unknown category. The ride detection module, the riding tool classification module, the voice broadcast detection module, and the riding tool identification module may alternatively be configured at the kernel layer. The modules occupy memory capacity of the kernel layer, which may reduce a response speed of the electronic device. The ride detection module, the riding tool classification module, the voice broadcast detection module, and the riding tool identification module may alternatively be configured at the application framework layer.

The application framework layer provides an application programming interface (application programming interface, API) and a programming framework for an application at the application layer. The application framework layer includes some predefined functions. As shown in FIG. 3, the application framework layer may include a sensor service module, an audio service module, a base station signal service module.

The hardware abstraction layer may include a plurality of functional modules, for example, a sensor management module (sensor HAL), an audio management module, a base station signal management module, and the like. The kernel layer is a layer between hardware and software. The kernel layer includes at least a base station signal driver, an audio driver, and a sensor driver.

The modem processor acquires a base station signal. The base station signal is transmitted to the ride detection module and the riding tool identification module through the base station signal driver, the base station signal management module, and the base station signal service module in sequence. The microphone acquires a voice signal. The voice signal is transmitted to the voice broadcast detection module through the audio driver, the audio management module, and the audio service module in sequence. The acceleration sensor acquires an acceleration signal. The acceleration signal is transmitted to the ride detection module and the riding tool classification module through the sensor driver, the sensor management module, and the sensor service module in sequence. The magnetometer sensor acquires a magnetometer signal. The magnetometer signal is transmitted to the riding tool classification module through the sensor driver, the sensor management module, and the sensor service module in sequence.

In this embodiment, the ride detection module, the riding tool classification module, the voice broadcast detection module, and the riding tool identification module are packaged into an APP, and the APP is invoked by another APP at the application layer. The ride detection module, the riding tool classification module, the voice broadcast detection module, and the riding tool identification module are configured to be in an invisible state on a home screen. For example, the arrival reminder APP at the application layer may invoke the ride detection module, the riding tool classification module, the voice broadcast detection module, and the riding tool identification module. The ride detection module acquires an acceleration signal and a base station signal, and identifies whether being in a riding state based on the acceleration signal and the base station signal.

A detection result of the ride detection module is obtained by the riding tool classification module. When the detection result is being in a riding state, the riding tool classification module may acquire an acceleration signal and a magnetometer signal, and may obtain scores of different riding tools based on the acceleration signal and the magnetometer signal. Scores of different riding tools may include: a metro score (a score indicating that the riding tool is a metro), a high-speed railway score (a score indicating that the riding tool is a high-speed railway), a bus&car score (where & indicates that the bus and the car are not distinguished, and the score indicates that the riding tool is a bus&car), and an unknown category score (a score indicating that a category of the riding tool is not determined).

The voice broadcast detection module may acquire a voice signal, detect whether there is a voice broadcast based on the voice signal, and determine whether it is a metro voice broadcast or a bus voice broadcast if there is a voice broadcast, or determine, if there is no voice broadcast, that the voice broadcast is not detected. Identification results of the riding tool classification module and the voice broadcast detection module are sent to the riding tool identification module, and the riding tool identification module identifies, based on the identification results of the riding tool classification module and the voice broadcast detection module, that riding tools are a metro, a high-speed railway, a bus, a car, and an unknown category.

The riding tool identification method applied to the software and hardware frameworks is described in detail below.

### Embodiment 1

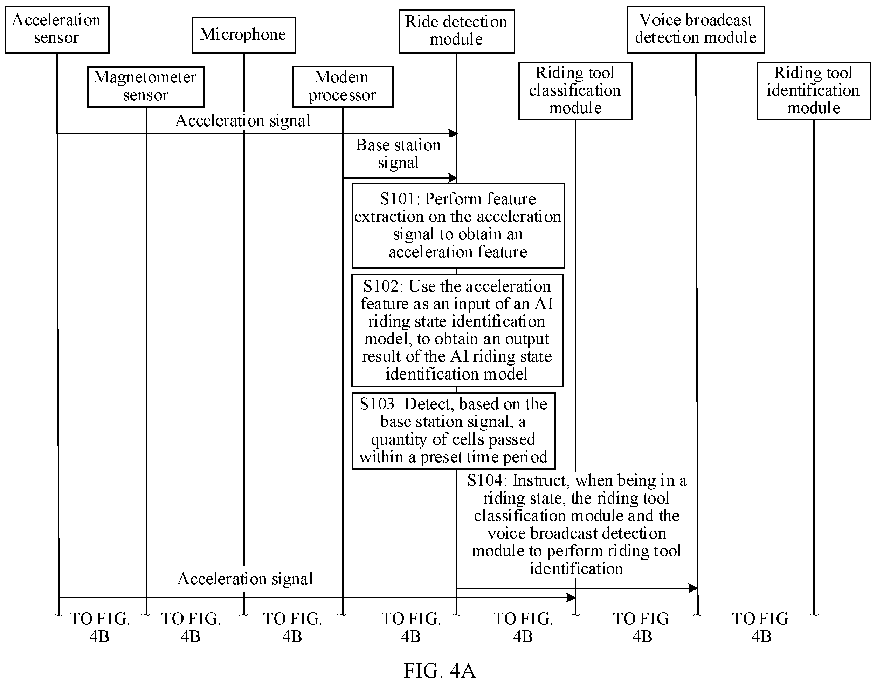

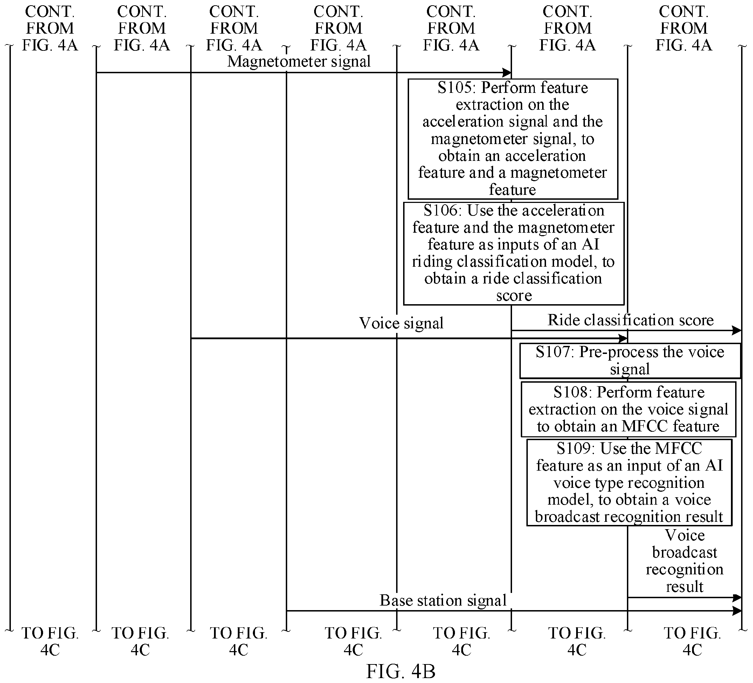

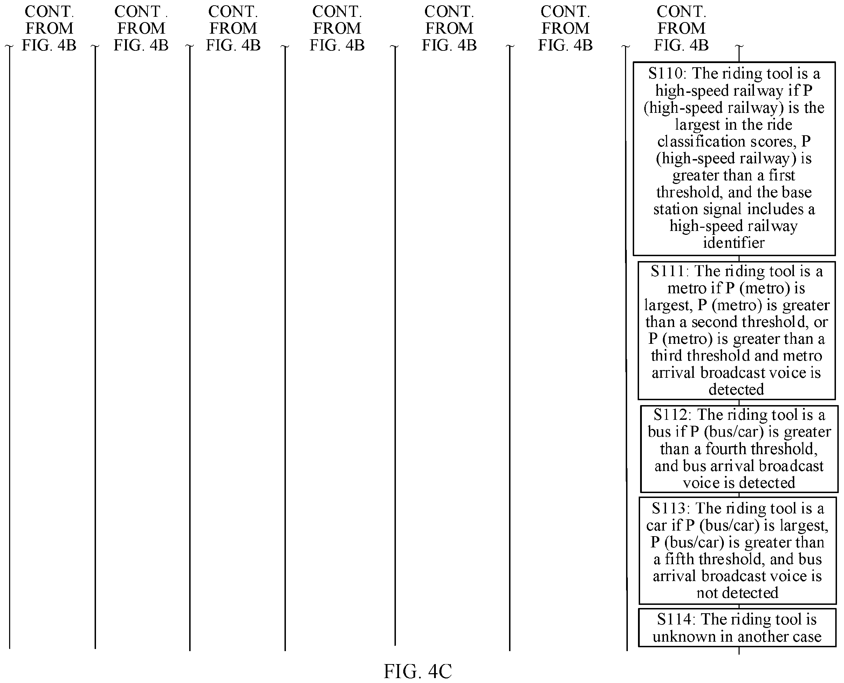

In the riding tool identification method, a plurality of sensor signals, a base station signal, and a voice signal may be fused, and riding tool identification is performed through a plurality of modules related to riding tool identification. The plurality of sensor signals include an acceleration signal and a magnetometer signal. The acceleration signal may be acquired by the acceleration sensor, the magnetometer signal may be acquired by the magnetometer sensor, the base station signal may be acquired by the modem processor, and the voice signal may be acquired by the microphone. Then, riding tools are identified by the ride detection module, the riding tool classification module, the voice broadcast detection module, and the riding tool identification module. For the process, refer to FIG. 4A to FIG. 4C. The process may include the following steps:

S101: The ride detection module performs feature extraction on an acceleration signal to obtain an acceleration feature. The acceleration feature may be an acceleration value, which may be multidimensional data extracted from sampling values of 100 HZ (hertz) of x, y, and z axes of the acceleration signal, for example, data of three axes on a plurality of dimensions such as a mean value, a peak value, and Fourier transform.

S102: The ride detection module uses the acceleration feature as an input of an artificial intelligence (Artificial Intelligence, AI) riding state identification model, to obtain an output result of the AI riding state identification model, where the output result of the AI riding state identification model may indicate whether being in a riding state. In an example, the output result of the AI riding state identification model may be a sign of whether being in a riding state. For example, the AI riding state identification model may output one of 0 and 1, where 0 indicates being in a non-riding state, and 1 indicates being in a riding state. For example, the AI riding state identification model may be a binary classification network model. An output result of the binary classification network model may be one of 0 and 1, where 0 indicates being in a non-riding state, and 1 indicates being in a riding state.

The AI riding state identification model may be configured in the ride detection module or may be independent of the ride detection module. During riding state identification, the ride detection module may invoke the AI riding state identification model. The AI riding state identification model may be obtained through training by the electronic device, or may be obtained through training by another electronic device. After being obtained through training by the another electronic device, the AI riding state identification model is provided to a ride detection module of an electronic device for use. The AI riding state identification model may be obtained by training based on at least one of a decision tree, a support vector machine (support vector machine, SVM), logistic regression, and a neural network. In a process of training the AI riding state identification model by the electronic device, the electronic device may extract a historical acceleration feature from acceleration signals during historical ride, and train the AI riding state identification model based on the historical acceleration feature.

For example, the electronic device may extract a historical acceleration value from the acceleration signals during historical ride, and train the AI riding state identification model based on the historical acceleration value and an Adaptive Boost (Adaptive Boost, AdaBoost) algorithm. The AI riding state identification model may learn an acceleration change in a riding state, so that a mapping relationship between the riding state and the acceleration change is obtained. The acceleration signals during historical ride may include acceleration signals of riding a metro, a high-speed railway, a bus, and a car, so that differences in changes of accelerations of different riding tools are considered to improve accuracy of the AI riding state identification model.

After the AI riding state identification model is trained, the ride detection module may invoke the trained AI riding state identification model, and input an extracted acceleration feature into the AI riding state identification model. The AI riding state identification model identifies a riding state based on learned acceleration changes in a riding state and acceleration changes reflected by the currently inputted acceleration feature, and outputs a sign that can indicate whether being in a riding state.

The electronic device may further extract a historical acceleration feature from acceleration signals when there is no historical ride, and train the AI riding state identification model based on the acceleration feature during historical ride and the acceleration feature when there is no historical ride. The acceleration signal when there is no ride may be an acceleration signal when the user is waking, cycling, or running, so that acceleration changes in more scenarios are introduced to improve the accuracy of the AI riding state identification model. The acceleration signal when there is no ride may be obtained in the following manners.

In a manner, the acceleration signal is acquired by a wearable device worn by the user. In another manner, an acceleration signal of a device such as a mobile phone carried by the user is considered as the acceleration signal of the user. In still another manner, the acceleration signal is simulated by the electronic device. For example, simulation is performed with reference to the acceleration signal during ride, to obtain an acceleration signal different from the acceleration signal during ride, and the different acceleration signal is used as the acceleration signal when there is no ride.

S103: The ride detection module detects, based on the base station signal, a quantity of cells passed within a preset time period.

The base station signal includes a cell identifier, and different cells have different cell identifiers. When the electronic device is handed over from one cell to another cell, the cell identifier included in the base station signal changes. Based on the change of the cell identifier, it may be determined that the electronic device is handed over from one cell to another cell, and the electronic device passes by two cells. In this way, the ride detection module may detect a quantity of changes of the cell identifier within the preset time period, and obtain, based on the quantity of changes of the cell identifier, the quantity of cells passed within the preset time period.

For example, within the preset time period, the cell identifier changes from cell 1 to cell 2, and then changes from cell 2 to cell 3. The cell identifier changes twice and passes by three cells. Based on this, the ride detection module detects that the quantity of changes of the cell identifier is N, and the quantity of cells passed is (N+1).

In this embodiment, steps S101-S102 and step S103 may be performed in parallel. Alternatively, step S103 may be first performed, and then steps S101-S102 are performed. A sequence of steps S101-S102 and step S103 is not limited in this embodiment.

S104: The ride detection module instructs, when the ride detection module determines being in a riding state based on the quantity of cells and an output result of the AI riding state identification model indicates being in a riding state, the riding tool classification module and the voice broadcast detection module to perform riding tool identification.

The ride detection module determines being in a riding state if the quantity of cells passed by the electronic device within the preset time period is greater than a preset quantity of cells. Generally, a speed of the user when walking, cycling, or running is less than a speed during ride. Correspondingly, within a time period, a movement distance of the user when walking, cycling, or running is less than a movement distance during ride. A larger movement distance may indicate a larger quantity of times of cell handover in the electronic device, and indicate a larger quantity of cells passed by the electronic device within a time period. Based on this, the ride detection module may set a preset quantity of cells, and the preset quantity of cells represents a quantity of cells passed within the preset time period when the user may not ride. By comparing with the preset quantity of cells, whether being in a riding state is determined.

In an example, the ride detection module may collect statistics on a quantity of cells passed in a non-riding state within the preset time period, and the preset quantity of cells is obtained based on the quantity of cells passed in the non-riding state within the preset time period. For example, the ride detection module may collect statistics on a quantity of cells passed by the user within a preset time period when walking, cycling, and running, and a maximum quantity of cells in the collected quantities of cells is used as the preset quantity of cells, or the preset quantity of cells is obtained based on at least a part of all the collected quantities of cells, where the at least a part may be a quantity of cells with a middle value, excluding extreme cases such as a minimum quantity of cells and the maximum quantity of cells.

In an example, the ride detection module may collect statistics on a quantity of cells passed in a riding state within the preset time period, and the preset quantity of cells is obtained based on the quantity of cells passed in the riding state within the preset time period. For example, the ride detection module may collect statistics on a quantity of cells passed within a preset time period when the user rides a metro, a bus, a car, and the like, and a minimum quantity of cells in the collected quantities of cells is used as a preset quantity of cells, or the preset quantity of cells is obtained based on at least a part of all the collected quantities of cells. Details are not described herein again.

In this embodiment, the ride detection module may be manually triggered by the user to determine the preset quantity of cells. For example, when the user is walking, cycling, and running, the user enables the ride detection module, and the ride detection module may collect statistics on a quantity of cells passed to obtain the preset quantity of cells. In addition, the preset time period may be a time parameter used for identifying a riding state. The preset time period may be set to a smaller value to distinguish between scenarios of walking, cycling, running and riding. However, to improve the accuracy, a value of the preset time period may not be too small. For example, the preset time period may be in a range of [3 minutes, 5 minutes], a time point is selected from [3 minutes, 5 minutes], and the value of the preset time period is not limited in this embodiment.

An output of the ride detection module may be used as an interface, and the riding tool classification module and the voice broadcast detection module may invoke the interface, to obtain a detection result of the ride detection module. When the detection result is being in a riding state, the riding tool classification module and the voice broadcast detection module may identify and classify riding tools, to identify a category of the riding tool.

When the ride detection module determines being in a non-riding state based on the quantity of cells and/or the output result of the AI riding state identification model indicates being in a non-riding state, the ride detection module continues to obtain an acceleration signal and a base station signal.

S105: The riding tool classification module performs feature extraction on the acceleration signal and the magnetometer signal, to obtain an acceleration feature and a magnetometer feature. The magnetometer feature may be a geomagnetic amplitude, or may be data on a plurality of dimensions such as a mean value, a peak value, and Fourier transform that is extracted from the magnetometer signal.

S106: The riding tool classification module uses the acceleration feature and the magnetometer feature as inputs of the AI riding classification model, to obtain an output result of the AI riding classification model, where the output result of the AI riding classification model is scores of a riding tool, namely, a metro, a high-speed railway, a bus&car, and an unknown category, which is referred to as a ride classification score for short, and the ride classification score is denoted as P (metro), P (high-speed railway), P (bus/car), and P (unknown). For example, the AI riding classification model may be a four-classification network model. The four-classification network model may output a ride classification score.

The AI riding classification model may be configured in the riding tool classification module, or may be independent of the riding tool classification module. During riding tool identification, the riding tool classification module may invoke the AI riding classification model. The AI riding classification model may be obtained through training by the electronic device, or may be obtained through training by another electronic device. After being obtained through training by the another electronic device, the AI riding state identification model is provided to a riding tool classification module of an electronic device for use. The AI riding classification model may be obtained by training based on at least one of a decision tree, an SVM, logistic regression, and a neural network.

In a process of training the AI riding classification model, the electronic device may extract a historical acceleration feature from acceleration signals during historical ride, and extract a historical magnetometer feature from magnetometer signals during historical ride. The historical acceleration feature can reflect acceleration changes during ride, and the historical magnetometer feature can reflect fluctuations of a geomagnetic amplitude during ride. The historical ride may include riding a metro, a high-speed railway, a bus, and a car, so that historical acceleration features and historical magnetometer features of different riding tools are obtained, and the AI riding classification model is trained based on the historical acceleration features and the historical magnetometer features.

For example, the historical acceleration feature may be a historical acceleration value, and the historical magnetometer feature may be a historical geomagnetic amplitude. The electronic device can train the AI riding classification model based on the historical acceleration value, the historical geomagnetic amplitude, and the AdaBoost algorithm. The AI riding classification model may learn acceleration changes and geomagnetic fluctuations of different riding tools. For example, the AI riding classification model may establish relationships between different riding tools and acceleration changes and geomagnetic fluctuations.

After the AI riding classification model is trained, the riding tool classification module invokes the trained AI riding classification model to input a currently extracted acceleration feature and magnetometer feature into the AI riding classification model. The AI riding classification model may output scores of different riding tools based on the learned acceleration changes and geomagnetic fluctuations of different riding tools, an acceleration change reflected by the currently extracted acceleration feature and a geomagnetic fluctuation reflected by the magnetometer feature, that is, the AI riding classification model may output four scores, namely, P (metro), P (high-speed railway), P (bus/car), and P (unknown). P (metro), P (high-speed railway), P (bus/car), and P (unknown) may be probability values, for example, P (metro) indicates a probability that the riding tool is a metro.

In addition, the electronic device may further extract a historical acceleration feature and a historical magnetometer feature when there is no ride from an acceleration signal and a magnetometer signal when there is no historical ride, and train the AI riding classification model based on the historical acceleration feature and the historical magnetometer feature during ride, and the historical acceleration feature and the historical magnetometer feature when there is no ride, so that differences between acceleration changes and geomagnetic fluctuations in different scenarios are considered, to improve the accuracy of the AI riding classification model.

In this embodiment, the riding tool classification module may introduce the magnetometer feature, to facilitate in distinguishing between riding tools of different categories through the magnetometer feature. This is because, during start and stop of a metro, a geomagnetic amplitude may greatly fluctuate due to electromagnetic induction. During start and stop of a high-speed railway, a geomagnetic amplitude fluctuates due to electromagnetic induction, but the fluctuation of the geomagnetic amplitude of the high-speed railway is less than the fluctuation of the geomagnetic amplitude of the metro. During start and stop of a bus and a car, geomagnetic amplitudes may also fluctuate. Since there is no electromagnetic induction or electromagnetic induction is weak, fluctuations of geomagnetic amplitudes of the bus and the car are less than the fluctuation of the geomagnetic amplitude of the high-speed railway. Therefore, the magnetometer feature reflecting a fluctuation of a geomagnetic amplitude is introduced into identification of a category of the riding tool, to effectively distinguish between riding tools, thereby improving the accuracy of identifying a category of the riding tool.

S 107: The voice broadcast detection module pre-processes the voice signal, to eliminate influence of noise on the voice signal and determine that the voice signal is not a noise signal. If the voice signal is determined as a noise signal, the voice broadcast detection module may continue to obtain a voice signal. For example, the voice broadcast detection module performs voice detection on the voice signal, to detect that there is a sound in an environment where the electronic device is located and that the sound is not noise.

The voice signal may be acquired by a microphone of the electronic device, and the voice signal acquired by the microphone is sent to the voice broadcast detection module for identification and processing. However, if the electronic device keeps the microphone in an on-state for a long time, resources may be wasted and power consumption may be increased. Based on this, the electronic device may control an operating status of the microphone.

In a control method, if the ride detection module detects being in a riding state, the microphone is controlled to be turned on; and if the ride detection module detects being in a non-riding state or changing from a riding state to a non-riding state, the microphone is controlled to be turned off. The microphone may intermittently or periodically acquire a voice signal within a time period from when the microphone is turned on to when the microphone is turned off.

In another control method, after enabling an arrival ride code push function, the electronic device controls the microphone to be turned on; and after completing push of a ride code, the electronic device controls the microphone to be turned off. After pushing the ride code once and controlling the microphone to be turned off, the electronic device may control, based on a rule, the microphone to be turned on again. For example, the electronic device may control the microphone to be turned on again at an interval of time. In another example, the electronic device may obtain location information. If the location information indicates that there is possibility of taking a ride (such as along a traffic line), and the electronic device controls the microphone to be turned on again.

In this embodiment, the electronic device may control the microphone in combination with modules used for the arrival ride code push function and riding tool category identification. For example, the arrival ride code push function is combined with the ride detection module, and after the electronic device enables the arrival ride code push function, the microphone is controlled to be turned on; and if the ride detection module detects a non-riding state, the microphone is controlled to be turned off. In another example, after enabling the arrival ride code push function, the electronic device controls the microphone to be turned on; within a time period when the microphone is in an on state, the ride detection module detects being in a non-riding state within the time period, the electronic device may turn off the microphone; and after the ride detection module detects being in a riding state, the electronic device may turn on the microphone. Certainly, the electronic device may further turn off the microphone after detecting use of the pushed ride code.

In another control method, if the ride detection module detects being in a riding state, the microphone is controlled to be turned on; and after the voice broadcast detection module completes recognition processing, the microphone is controlled to be turned off. It may be understood that, a result recognized by the voice broadcast detection module may be maintained until an end of a riding state, and after the voice broadcast detection module recognizes a result, the microphone is controlled to be turned off, where an off state of the microphone is maintained until an end of a riding state. For example, the ride detection module detects being in a riding state, the voice broadcast detection module detects voice and identifies a bus, a voice broadcast recognition result of the voice broadcast detection module is a bus. The voice broadcast recognition result may be recorded in a corresponding memory until the ride detection module detects being in a non-riding state (for example, drop-off of the user), and the voice broadcast recognition result of a bus in the memory is cleared. After the voice broadcast detection module recognizes a bus, the microphone is turned off, and the microphone is in an off state within a time period from when the voice broadcast detection module recognizes a bus to when the ride detection module detects being a non-riding state. When the ride detection module detects being in a riding state again, the microphone is turned on, and the voice broadcast detection module performs voice recognition again.

It may be understood that, during a ride, a voice playback detection module may control the microphone to be turned on, and voice signals are acquired for a plurality of times, to perform voice recognition for a plurality of times. Based on this, a memory in the electronic device may store voice broadcast recognition results of the voice playback detection module, a voice broadcast recognition result detected each time may replace a previous voice broadcast recognition result and be stored in the memory, and the voice broadcast recognition result in the memory is cleared when the ride ends. For example, during a ride, the voice broadcast detection module may intermittently or periodically control the microphone to be turned on.

In addition, the electronic device may further control the microphone according to an operating status of the electronic device. For example, when the electronic device is in a screen-on state, the microphone is controlled to be turned on; and when the electronic device is in a screen-off state, the microphone is controlled to be turned off. In another example, when the electronic device is locked, the microphone is controlled to be turned off; and when the electronic device is unlocked, the microphone is controlled to be turned on. The control based on the operating status of the electronic device may be combined with the foregoing manner, which is not described in detail in this embodiment.

S108: The voice broadcast detection module performs feature extraction on the preprocessed voice signal, to obtain a Mel-frequency cepstral coefficient (Mel-Frequency Cepstral Coefficient, MFCC) feature.

S109: The voice broadcast detection module uses the MFCC feature as an input of the AI voice type recognition model to obtain an output result of the AI voice type recognition model, where the output result of the AI voice type recognition model may be a voice broadcast recognition result, and the voice broadcast recognition result is one of a metro voice broadcast, a bus voice broadcast, and being not detected.

The metro and the bus may perform voice broadcast during driving. The voice broadcast may be pre-recorded human voice, and the human voice may be voice of a real person or a virtual person. In other words, the voice broadcast may correspond to a metro broadcaster or a bus broadcaster, and an MFCC feature during voice broadcast may reflect a voiceprint characteristic of a broadcaster. Based on this, the AI voice type recognition model in this embodiment may learn voiceprint characteristics of different broadcasters, to establish a mapping relationship between a voiceprint characteristic reflected by a voice feature and a broadcaster. After a voice broadcast detection module inputs a currently extracted MFCC feature into the AI voice type recognition model, the AI voice type recognition model may identify a voiceprint feature reflected by the MFCC feature. Based on whether the voiceprint feature corresponds to a metro broadcaster or a bus broadcaster, or that the voiceprint feature is not detected, a voice signal may be introduced, so that accuracy of identifying a metro and a bus is improved, and a bus and a car can be distinguished.

The AI voice type recognition model may be configured in the voice broadcast detection module, or may be independent of the voice broadcast detection module. During riding tool identification, the voice broadcast detection module may invoke the AI voice type recognition model. The AI voice type recognition model may be obtained through training by the electronic device, or may be obtained through training by another electronic device. After being obtained through training by the another electronic device, the AI riding state identification model is provided to a voice broadcast detection module of an electronic device for use. In this embodiment, the AI voice type recognition model may be obtained by training based on a convolutional neural network, for example, may be obtained by training based on at least one of a deep residual network (Deep Residual Network, ResNet), a deep convolutional neural network (VGG), and a lightweight deep neural network (MobileNet).

The electronic device may obtain voice signals of metro arrival and bus arrival in advance. Since voice broadcasts in different cities may be different, the electronic device may obtain voice signals of metro arrival and bus arrival of different cities in advance. The electronic device performs feature recognition on each voice signal obtained in advance, to obtain an MFCC feature of each voice signal, and trains the AI voice type recognition model based on the MFCC feature of the voice signal. For example, the electronic device may train the AI voice type recognition model based on the MFCC feature of the voice signal and MobileNet.

The MFCC feature is a relatively prominent feature in voiceprint recognition. Riding tool category identification based on the MFCC feature and the AI voice type recognition model is merely an example. The voice broadcast detection module may perform riding tool category identification based on other voice features and the AI voice type recognition model, and details are not described herein again.

In this embodiment, the voice broadcast detection module and the riding tool classification module may run in parallel. Alternatively, one of the voice broadcast detection module and the riding tool classification module runs first, and the other module runs later. A sequence of the two models is not limited in this embodiment. Recognition results of the voice broadcast detection module and the riding tool classification module are sent to the riding tool identification module for processing. For example, the riding tool classification module sends a ride classification score to the riding tool identification module, and the voice broadcast detection module sends a voice broadcast recognition result to the riding tool identification module.

S110: The riding tool identification module determines that the riding tool is a high-speed railway if P (high-speed railway) is the largest in the ride classification scores, P (high-speed railway) is greater than a first threshold, and the base station signal includes a high-speed railway identifier.

S111: The riding tool identification module determine that the riding tool is a metro if P (metro) is the largest in the ride classification scores, and P (metro) is greater than a second threshold, or the riding tool identification module determines that the riding tool is a metro if P (metro) is greater than a third threshold, and the voice broadcast detection module detects metro arrival broadcast voice, where the third threshold may be less than the second threshold, the second threshold and the first threshold may be the same or different.

S 112: The riding tool identification module determines that the riding tool is a bus if P (bus/car) in the ride classification scores is greater than a fourth threshold, and the voice broadcast detection module detects bus arrival broadcast voice.

S 113: The riding tool identification module determines that the riding tool is a car if P (bus/car) is the largest in the ride classification scores, P (bus/car) is greater than a fifth threshold, and the voice broadcast detection module does not detect the bus arrival broadcast voice, where the fifth threshold, the fourth threshold, the second threshold, and the first threshold may be the same or different, or may be partially the same.

In the process of distinguishing between a bus and a car by using bus arrival broadcast voice, the riding tool identification module may add a time limitation in a determination condition. In a manner, if P (bus/car) in the ride classification scores is greater than the fourth threshold, and the voice broadcast detection module detects bus arrival broadcast voice within a first preset duration, the riding tool identification module determines that the riding tool is a bus. It P (bus/car) is the largest in the ride classification scores, P (bus/car) is greater than the fifth threshold, and the voice broadcast detection module does not detect bus arrival broadcast voice within a second preset duration, the riding tool identification module determines that the riding tool is a car, where the second preset duration may be longer than the first preset duration, that is, the second preset duration is selected as a longer time period, and a case in which a distance between bus stations is relatively long is excluded, and there is no bus broadcast voice for a relatively long time, thereby improving the accuracy.

S114: The riding tool identification module determines that the riding tool is an unknown category in other situations other than step S110 to step S 113.

In the riding tool identification method shown in FIG. 4A to FIG. 4C, the plurality sensor signals, the base station signal, and the voice signal are fused to perform riding tool identification. A high-speed railway and a metro may be effectively distinguished based on the magnetometer signal, a bus and a car may be effectively distinguished based on the voice signal, and a metro and a bus may be further distinguished based on the voice signal, so that accuracy of the metro and the bus is improved. In addition, a high-speed railway signal is distinguished based on the base station signal, so that accuracy of the high-speed railway is improved. In this way, the riding tool identification method can effectively distinguish between riding tools of different categories, thereby improving the accuracy of identifying a riding tool.

In addition, the output result of the AI voice type recognition model may be a broadcast result score, where the broadcast result score includes scores of three states, namely, P (metro voice broadcast), P (bus voice broadcast), and P (not detected). The broadcast result score may be a probability value, for example, P (a metro voice broadcast) indicates that a probability that the voice signal belongs to the metro voice broadcast.

The voice broadcast detection module may send a broadcast result score to the riding tool identification module. The riding tool identification module determines one result of a metro voice broadcast, a bus voice broadcast, and being not detected based on comparison between the broadcast result score and a threshold. The riding tool identification module may respectively set a threshold for a metro, a bus, and being not detected. If P (metro voice broadcast) is greater than a threshold of the metro, the metro voice broadcast is determined.

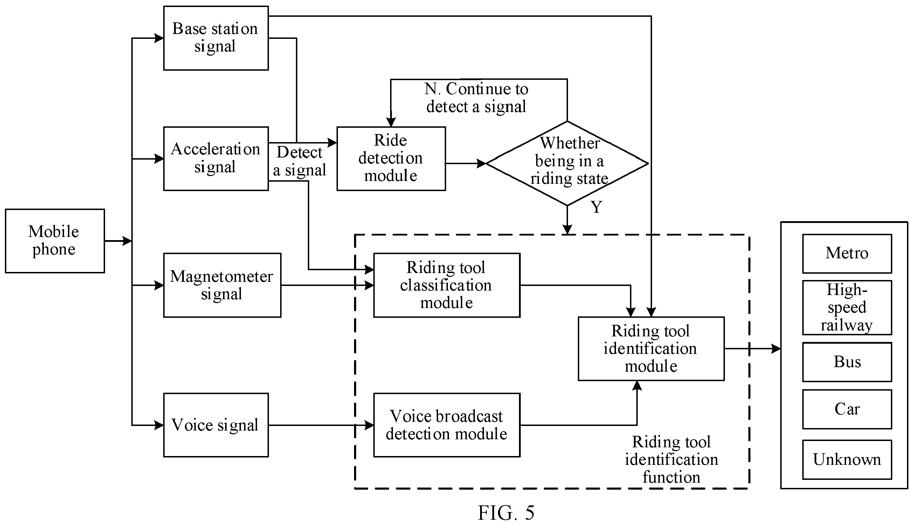

Using an example in which the electronic device is a mobile phone, a description in which the riding tool identification method is performed on the mobile phone is made below. As shown in FIG. 5, a hardware device in the mobile phone acquires a base station signal, an acceleration signal, a magnetometer signal, and a voice signal. The ride detection module detects a riding state based on the base station signal and the magnetometer signal, to determine whether being in a riding state. If being in a riding state is determined, the riding tool classification module may obtain a ride classification score based on the acceleration signal and the magnetometer signal. Correspondingly, the voice broadcast detection module may detect a voice broadcast based on the voice signal. The riding tool classification module, the voice broadcast detection module, and the riding tool identification module may be enabled after being in a riding state is determined, and are disabled after identification and detection is completed. The riding tool identification module may identify a category of the riding tool based on an identification result of the riding tool classification module (for example, a riding tool score), an identification result of the voice broadcast detection module (for example, a broadcast result score), and a base station signal. That identification and detection is completed may be to complete identification on a category of the riding tool once. If the ride detection module detects being in a riding state again, the riding tool classification module, the voice broadcast detection module, and the riding tool identification module are enabled again.

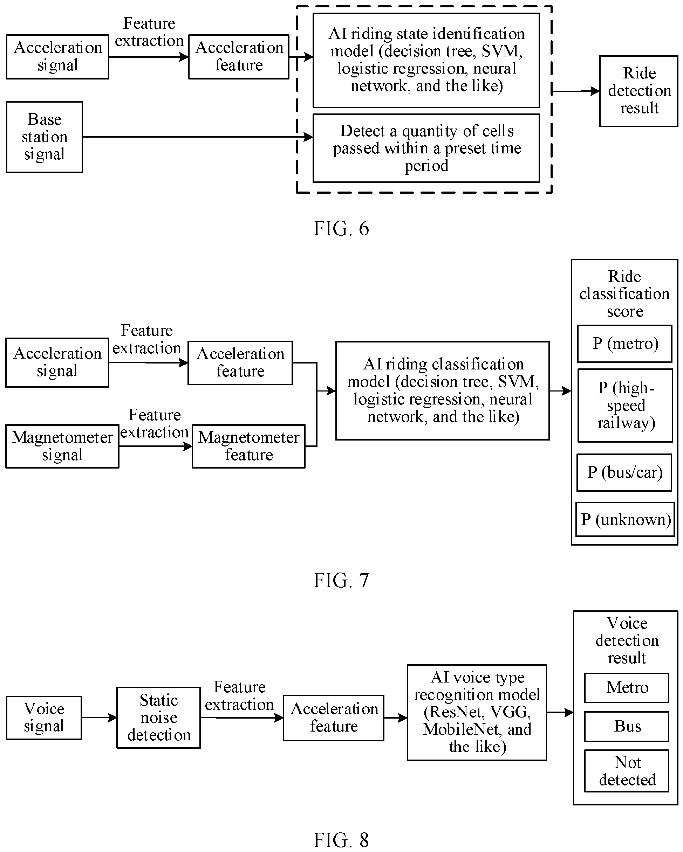

A working procedure of the ride detection module is shown in FIG. 6. The ride detection module extracts an acceleration feature from acceleration signals, and riding state identification based on the acceleration feature and the pre-trained AI riding state identification model to identify whether being in a riding state, where the AI riding state identification model may be obtained by training based on a decision tree, an SVM, logistic regression, a neural network, and the like. The ride detection module may detect, based on the base station signal, a quantity of cells passed within a preset time period. The ride detection module may determine being in a riding state if the quantity of cells is greater than a preset quantity of cells. When being in a riding state is identified respectively based on the quantity of cells and the AI riding state identification model, the ride detection module may obtain a detection result of being in a riding state. When being in a non-riding state is identified based on the quantity of cells or the AI riding state identification model, the ride detection module may obtain a detection result of being in a non-riding state.

After the riding detection module obtains a detection result, the ride detection module may continue to detect a riding state. The riding tool classification module, the voice broadcast detection module, and the riding tool identification module may continuous operate, or may also determine, based on the detection result of the ride detection module, whether to operate. In a manner, after the ride detection module obtains a detection result of being in a non-riding state, the ride detection module may continue to detect the base station signal and the acceleration signal, and the riding tool classification module, the voice broadcast detection module, and the riding tool identification module do not operate. After the ride detection module obtains a detection result of being in a riding state, the riding tool classification module, the voice broadcast detection module, and the riding tool identification module operate. The process is shown in FIG. 7 and FIG. 8.

FIG. 7 shows a working procedure of the riding tool classification module when the AI riding classification model is a four-classification network model. The riding tool classification module extracts an acceleration feature from acceleration signals, and extracts a magnetometer feature from magnetometer signals. Then, the riding tool classification module obtains ride classification scores based on the acceleration feature, the magnetometer feature, and a pre-trained four-classification network model. The four-classification network model may be obtained by training based on a decision tree, an SVM, logistic regression, a neural network, and the like. The ride classification scores include scores of riding tools of a metro, a high-speed railway, a bus&car, and an unknown category. The scores of four categories are denoted as P (metro), P (high-speed railway), P (bus/car), and P (unknown).

The four-classification network model is an optional model of the AI riding classification model. The AI riding classification model may be a three-classification network model. The three-classification network model may output scores of three categories, and the scores of three categories are denoted as P (metro), P (bus/car), and P (unknown). A quantity of categories that can be identified by the AI riding classification model is not limited in this embodiment.

FIG. 8 shows a working procedure of the voice broadcast detection module when the AI voice category recognition model is a three-classification network model. The voice broadcast detection module may obtain a voice signal and perform voice detection on the voice signal, to detect an ambient sound in the voice signal and detect that the voice signal is not noise. Then, the voice broadcast detection module performs feature extraction on a voice signal on which voice detection is performed, to obtain an MFCC feature. A voice broadcast recognition result is obtained based on the MFCC feature and a pre-trained three-classification network model. The three-classification network model is obtained by training based on ResNet, VGG, MobileNet, and the like. The voice broadcast recognition result may recognize one of a metro voice broadcast, a bus voice broadcast, and being not detected.

The three-classification network model is an optional model of the AI voice category recognition model. The AI voice category recognition model may be a binary classification network model. Voice broadcast recognition results outputted by the binary classification network model may be a metro voice broadcast and a bus voice broadcast. A quantity of voice results that can be recognized by the AI voice category recognition model is not limited in this embodiment.

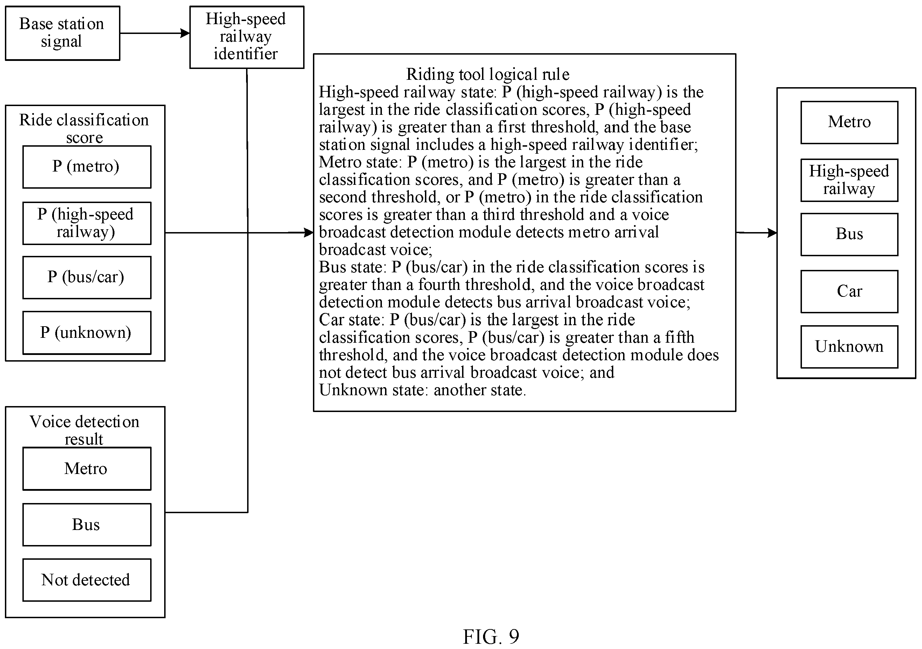

The ride classification scores obtained by the riding tool classification module are provided to the riding tool identification module, the voice broadcast recognition results obtained by the voice broadcast detection module are also provided to the riding tool identification module, and the riding tool identification module identifies a category of the riding tool. A working procedure is shown in FIG. 9. The riding tool classification module may determine based on riding tool logical rules, and the riding tool logical rules are as follow:

High-speed railway state: P (high-speed railway) is the largest in the ride classification scores, P (high-speed railway) is greater than a first threshold, and the base station signal includes a high-speed railway identifier.

Metro state: P (metro) is the largest in the ride classification scores, and P (metro) is greater than a second threshold, or P (metro) in the ride classification scores is greater than a third threshold and the voice broadcast detection module detects metro arrival broadcast voice.

Bus state: P (bus/car) in the ride classification scores is greater than a fourth threshold, and the voice broadcast detection module detects bus arrival broadcast voice.

Car state: P (bus/car) is the largest in the ride classification scores, P (bus/car) is greater than a fifth threshold, and the voice broadcast detection module does not detect bus arrival broadcast voice.

Unknown state: another state.

In combination with the foregoing riding tool logical rules, the riding tool identification module may identify a category of the riding tool based on the base station signal, the ride classification score, and the voice broadcast recognition result.

In this embodiment, the riding tool identification method may be applied to an arrival ride code push scenario. When the user rides at least one of a bus or a metro, a mobile phone carried by the user can implement the riding tool identification method. When the mobile phone identifies that the user is in a riding state, the mobile phone may obtain a ride classification score based on the acceleration signal and the magnetometer signal and obtain a voice broadcast recognition result based on the voice signal, and then the mobile phone identifies a category of a current riding tool based on the ride classification score, the voice broadcast recognition result, and the base station signal. If a category of the riding tool is a metro, the mobile phone may push a metro ride code. If a category of the riding tool is a bus, the mobile phone may push a bus ride code. If a category of the riding tool is one of a high-speed railway, a car, and an unknown category, the mobile phone does not push a ride code.

### Embodiment 2

During start and stop of a metro, a geomagnetic amplitude may greatly fluctuate due to electromagnetic induction. During start and stop of a high-speed railway, a geomagnetic amplitude fluctuates due to electromagnetic induction, but the fluctuation of the geomagnetic amplitude of the high-speed railway is less than the fluctuation of the geomagnetic amplitude of the metro. During start and stop of a bus and a car, geomagnetic amplitudes may also fluctuate. Since there is no electromagnetic induction or electromagnetic induction is weak, fluctuations of geomagnetic amplitudes of the bus and the car are less than the fluctuation of the geomagnetic amplitude of the high-speed railway. Therefore, in this embodiment, a category of the riding tool may be identified based on the fluctuation of the geomagnetic amplitude. The magnetometer feature in the magnetometer signal may reflect a geomagnetic fluctuation, and correspondingly, the riding tool classification module may identify a category of the riding tool based on the magnetometer signal.

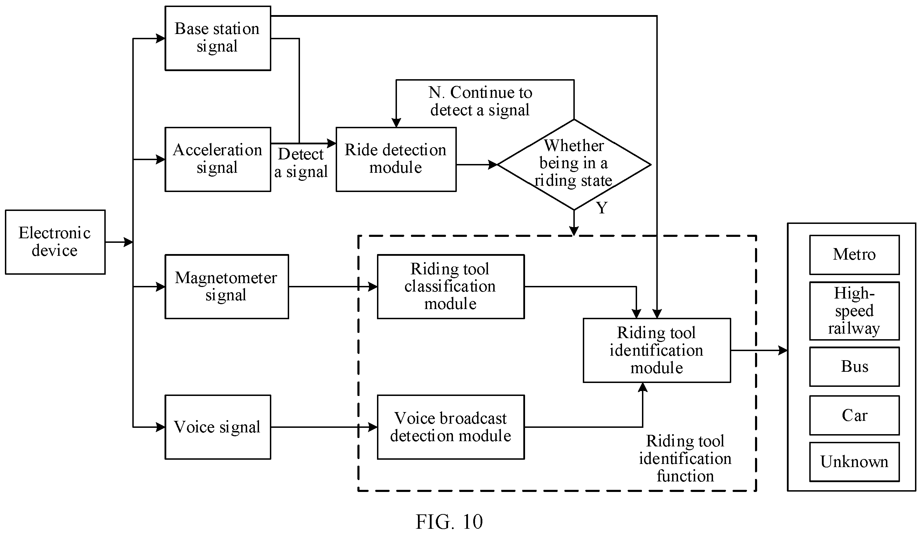

FIG. 10 shows a working procedure of the riding tool identification method. The ride detection module extracts an acceleration feature from the acceleration signal, and performs riding state identification based on the acceleration feature and the pre-trained AI riding state identification model, to identify whether being in a riding state. The riding detection module may identify a riding state based on the base station signal. When being in a riding state is determined based on the acceleration signal and the base station signal, a detection result of being in a riding state is obtained.

The riding tool classification module extracts a magnetometer feature from the magnetometer signal. Then, the riding tool classification module obtains ride classification scores based on the magnetometer feature, and a pre-trained AI riding classification model. The AI riding classification model may be obtained by training based on a decision tree, an SVM, logistic regression, a neural network, and the like. The ride classification scores include scores of riding tools of a metro, a high-speed railway, a bus&car, and an unknown category. The scores of four categories are denoted as P (metro), P (high-speed railway), P (bus/car), and P (unknown). Different from Embodiment 1, the AI riding classification model is obtained by training based on the magnetometer feature. The process is not described in detail again. The voice broadcast detection module may obtain a voice signal, and a voice broadcast recognition result is obtained based on a voice feature (for example, an MFCC feature) extracted from the voice signal and the AI voice type recognition model. The riding tool identification module may identify a category of the riding tool based on the ride classification score, the voice broadcast recognition result, and the base station signal. For example, a category of the riding tool may be identified with reference to the riding tool logical rules.

In Embodiment 1 and Embodiment 2, the accuracy may be improved in combination with the riding tool identification module and the base station signal. For example, when a category of the riding tool is a high-speed railway, the accuracy may be improved based on the base station signal. However, the riding tool identification module may also identify a category of the riding tool based on the ride classification score and the voice broadcast recognition result, so that a high-speed railway, a metro, a bus, and a car can be effectively distinguished, and the accuracy may also be improved.

### Embodiment 3

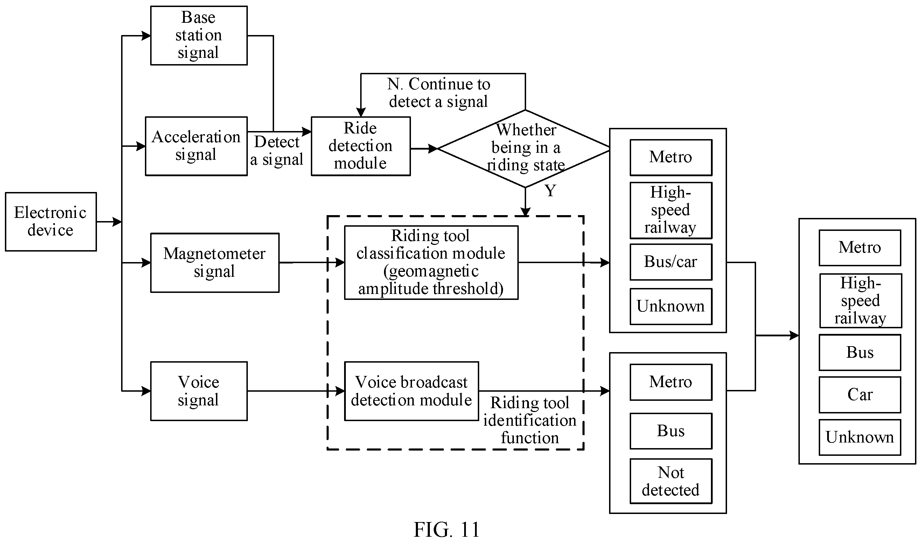

FIG. 11 shows another working procedure of the riding tool identification method. The ride detection module extracts an acceleration feature from the acceleration signal, and performs riding state identification based on the acceleration feature and the pre-trained AI riding state identification model, to identify whether being in a riding state. The riding detection module may identify a riding state based on the base station signal. When being in a riding state is determined based on the acceleration signal and the base station signal, a detection result of being in a riding state is obtained.

When the riding tool classification module performs identification based on the magnetometer signal, fluctuation data of a geomagnetic amplitude may be set for a metro, a high-speed railway, and a bus/car. For example, geomagnetic amplitude thresholds are set for the metro, the high-speed railway, and the bus/car. The geomagnetic amplitude threshold of the metro is greater than the geomagnetic amplitude threshold of the high-speed railway, and the geomagnetic amplitude threshold of the high-speed railway is greater than the geomagnetic amplitude threshold of the bus/car.

After obtaining a magnetometer signal, the riding tool classification module extracts a magnetometer feature based on the magnetometer signal, for example, a geomagnetic amplitude (a manifestation of the magnetometer feature) is obtained based on the magnetometer signal. Then, a category of the riding tool is identified based on comparison between the geomagnetic amplitude and the geomagnetic amplitude thresholds of the riding tools.

The voice broadcast detection module may obtain a voice signal, and a voice broadcast recognition result is obtained based on a voice feature (for example, an MFCC feature) extracted from the voice signal and the AI voice type recognition model, so that when the riding tool is a bus/car, the bus and the car can be distinguished based on the voice broadcast recognition result.

In this embodiment, the riding tool classification module may identify one riding tool of a high-speed railway, a metro, a bus/car, and an unknown category. When the riding tool is a bus/car, the voice broadcast detection module identifies that a current riding tool is one of a metro, a bus, and being not detected based on the voice signal, so that when the riding tool is a bus/car, the bus and the car can be distinguished based on the voice signal. In addition, when the riding tool is a metro, identification may also be performed based on the voice broadcast detection module, to improve the accuracy of the metro. The enabling of the voice broadcast detection module can identify the riding tool as a bus/car through the riding tool classification module, saving resources.

In Embodiment 1 to Embodiment 3, the voice broadcast detection module may be applied to a high-speed railway identifier. This is because the high-speed railway also broadcasts voice during driving, for example, broadcasts before arriving at a station and when arriving at a station. Voice of a high-speed railway broadcast may be different from that of a metro broadcast and a bus broadcast, and correspondingly, the AI voice type recognition model selects a four-classification network model. The electronic device may obtain voice signals of metro arrival, bus arrival, and high-speed railway arrival in advance. Since voice broadcasts in different cities may be different, the electronic device may obtain voice signals of metro arrival, bus arrival, and high-speed railway arrival in different cities in advance. The electronic device performs feature recognition on each voice signal obtained in advance, to obtain an MFCC feature of each voice signal, and trains the AI voice type recognition model based on the MFCC feature of the voice signal. For example, the electronic device may train the AI voice type recognition model based on the MFCC feature of the voice signal and MobileNet. The voice broadcast detection module may identify based on the AI voice type recognition model, to distinguish between a high-speed railway, a metro, a bus, and being not detected.

In addition to performing identification based on the AI voice type recognition model, the voice broadcast detection module may perform identification in another form. In a manner, the voice broadcast detection module may identify the riding tool as one of a high-speed railway, a metro, a bus, and an unknown category based on a broadcast frequency of a voice signal acquired by the microphone. Since a distance between high-speed railway stations is relatively long, a broadcast frequency of a high-speed railway recognized by the voice broadcast detection module is higher than a broadcast frequency of a car, but lower than broadcast frequencies of a metro and a bus; and a broadcast frequency of a metro detected by the voice broadcast detection module is higher than broadcast frequencies of a car, a bus, and a high-speed railway. Based on this, the voice broadcast detection module may identify a riding tool based on broadcast frequencies of voice signals acquired by the microphone.

However, in some cases, a distance between bus stations is relatively short, a broadcast frequency detected by the voice broadcast detection module is relatively high. Similarly, a distance between metro stations is relatively long in some cases, and a broadcast frequency detected by the voice broadcast detection module is relatively low. As a result, a result of the voice broadcast detection module is incorrect, and the accuracy is low although riding tools can be distinguished.

In another manner, the voice broadcast detection module may extract voice content from the voice signal, and identify, based on the voice content, that the riding tool is one of a high-speed railway, a metro, a bus, and an unknown category. For example, whether there are a metro keyword, a high-speed railway keyword, and a bus keyword in the voice content is identified. This is merely an example, and details are not described in this embodiment again.

Some embodiments of this application further provide an electronic device. The electronic device may include: one or more processors and a memory. The memory is configured to store one or more pieces of computer program code, the computer program code includes computer instructions, and the computer instructions, when executed by the one or more processors, cause the electronic device to perform the riding tool identification method.

This embodiment further provides a computer-readable storage medium. The computer-readable storage medium includes instructions, and the instructions, when run on an electronic device, cause the electronic device to perform the riding tool identification method.

This embodiment further provides a computer program product including instructions, and when the computer program product runs on an electronic device, the electronic device is enabled to perform the riding tool identification method.

This embodiment further provides a control device. The control device includes one or more processors and a memory. The memory is configured to store one or more pieces of computer program code, the computer program code includes computer instructions, and the computer instructions, when executed by the one or more processors, cause the control device to perform the riding tool identification method. The control device may be an integrated circuit IC, or may be a system-on-chip SOC. The integrated circuit may be a general-purpose integrated circuit, or may be a field programmable gate array FPGA, or may be an application-specific integrated circuit ASIC.

The foregoing descriptions are merely specific implementations of this application, but are not intended to limit the protection scope of this application. Therefore, the protection scope of this application shall be subject to the protection scope of the claims.

## Claims

1. A transportation means identification method, wherein the method comprises:
obtaining at least one of an acceleration signal acquired by an acceleration sensor and a magnetometer signal acquired by a magnetometer sensor in an electronic device;
identifying a category of a transportation means based on at least one of an acceleration feature and a magnetometer feature, to obtain a transportation means classification result, wherein the acceleration feature is obtained (S101) based on the acceleration signal, and the magnetometer feature is obtained based on the magnetometer signal;
obtaining a voice signal acquired by a microphone in the electronic device, and extracting a voice feature based on the voice signal;
recognizing a voice broadcast during transportation based on the voice feature, to obtain a voice broadcast recognition result; and
refining the category of the transportation means based on the transportation means classification result and the voice broadcast recognition result, for improving distinguishing between transportation means,
wherein recognizing the voice broadcast during transportation based on the voice feature, to obtain a voice broadcast recognition result comprises:
recognizing the voice broadcast during transportation based on a frequency of occurrence of broadcast of the voice signal and thresholds of frequency of occurrence of broadcast of different transportation means, to obtain the voice broadcast recognition result, wherein the voice broadcast recognition result indicates a category of a transportation means corresponding to the voice signal.

2. The method according to claim 1, wherein before the identifying, the method further comprises:
detecting whether the electronic device is in a transportation state;
triggering, if it is detected that the electronic device is in the transportation state, the electronic device to identify the transportation means, to obtain the transportation means classification result; or
continuing to detect, if it is detected that the electronic device is in a non-transportation state, whether the electronic device is in the transportation state.

3. The method according to claim 2, further comprising:
controlling on and off of the microphone based on whether the electronic device is in the transportation state;
and/or
controlling on and off of the microphone based on a transportation code push situation of the electronic device;
and/or
controlling on and off of the microphone based on an operating status of the electronic device.

4. The method according to claim 3, wherein the controlling on and off of the microphone based on whether the electronic device is in the transportation state comprises:
turning on the microphone if it is detected that the electronic device is in the transportation state; or
turning off the microphone if it is detected that the electronic device is in the non-transportation state.

5. The method according to claim 3 or 4, wherein the controlling on and off of the microphone based on a transportation code push situation of the electronic device comprises:
turning on the microphone if it is detected that the electronic device enables a transportation code push function;
turning off the microphone if it is detected that the electronic device completes push of a transportation code;
turning on the microphone every first time period after turning off the microphone, or controlling, after turning off the microphone, on and off of the microphone based on whether the electronic device is in the transportation state.

6. The method according to any one of claims 3 to 5, wherein the controlling on and off of the microphone based on an operating status of the electronic device comprises:
turning on the microphone if the electronic device is in a screen-on state; or
turning off the microphone if the electronic device is in a screen-off state.

7. The method according to any one of claims 2 to 6, wherein the detecting whether the electronic device is in a transportation state comprises:
obtaining a base station signal acquired by a modem processor in the electronic device within a preset time period;
detecting (S103), based on the base station signal, a quantity of cells passed by the electronic device within the preset time period; and
determining, based on the quantity of cells passed by the electronic device within the preset time period, whether the electronic device is in the transportation state.

8. The method according to any one of claims 2 to 6, wherein the detecting whether the electronic device is in a transportation state comprises:
inputting (S102) the acceleration feature into an artificial intelligence transportation state identification model to obtain a transportation identifier outputted by the artificial intelligence transportation state identification model, wherein the transportation identifier indicates whether the electronic device is in the transportation state or the non-transportation state, and the artificial intelligence transportation state identification model is obtained by training based on historical acceleration features of transportation means of different categories.

9. The method according to any one of claims 1 to 8, wherein the identifying comprises: inputting at least one of the acceleration feature and the magnetometer feature into an artificial intelligence transportation means classification model to obtain the transportation means classification result outputted by the artificial intelligence transportation means classification model, wherein the artificial intelligence transportation means classification model is obtained by training based on at least one of historical acceleration features and historical magnetometer features of the transportation means of different categories, and the transportation means classification result outputted by the artificial intelligence transportation means classification model indicates scores of the transportation means of different categories.

10. The method according to any one of claims 1 to 9, wherein recognizing the voice broadcast during transportation based on the voice feature, to obtain the voice broadcast recognition result comprises:
inputting (S109) the voice feature into an artificial intelligence voice type recognition model to obtain the voice broadcast recognition result outputted by the artificial intelligence voice type recognition model, wherein the artificial intelligence voice type recognition model is obtained by training based on historical voice features of the transportation means of different categories, and the voice broadcast recognition result indicates a category of a transportation means corresponding to the voice feature.

11. The method according to any one of claims 1 to 9, wherein recognizing the voice broadcast during transportation based on the voice feature, to obtain the voice broadcast recognition result comprises:
recognizing the voice broadcast during transportation based on key content of the voice signal and preset key content of different transportation means, to obtain the voice broadcast recognition result, wherein the voice broadcast recognition result indicates a category of a transportation means corresponding to the voice signal.

12. The method according to claim 9, wherein refining category of the transportation means based on the transportation means classification result and the voice broadcast recognition result comprises:
determining (S110), if a high-speed railway score is the largest in the transportation means classification result, and the high-speed railway score meets a first threshold condition, that the transportation means is a high-speed railway;
determining (S111), if a metro score is the largest in the transportation means classification result, and the metro score meets a second threshold condition, that the transportation means is a metro;
determining, if the metro score meets a third threshold condition, and the voice broadcast recognition result is a metro broadcast voice, that the transportation means is the metro;
determining (S112), if a bus/car score in the transportation means classification result meets a fourth threshold condition, and the voice broadcast recognition result is a bus broadcast voice, that the transportation means is a bus; and
determining (S113), if the bus/car score in the transportation means classification result is largest, the bus/car score meets a fifth threshold condition, and the voice broadcast recognition result is not the bus broadcast voice and the metro broadcast voice, that the transportation means is a car.

13. The method according to claim 12, wherein the determining, if a high-speed railway score is the largest in the transportation means classification result, and the high-speed railway score meets a first threshold condition, that the transportation means is a high-speed railway comprises:
determining, if the high-speed railway score is the largest in the transportation means classification result, the high-speed railway score meets the first threshold condition, and the base station signal comprises a high-speed railway identifier, that the transportation means is the high-speed railway, wherein the base station signal is acquired by the modem processor in the electronic device.

14. An electronic device, comprising one or more processors and a memory, wherein the memory is configured to store one or more pieces of computer program code, the computer program code comprises computer instructions, and the computer instructions, when executed by the one or more processors, cause the electronic device to perform the transportation means identification method according to any one of claims 1 to 13.

## Patentansprüche

1. Transportmittelidentifikationsverfahren, wobei das Verfahren Folgendes beinhaltet:
Erhalten mindestens eines eines durch einen Beschleunigungssensor erfassten Beschleunigungssignals und eines durch einen Magnetometersensor erfassten Magnetometersignals in einem elektronischen Gerät;
Identifizieren einer Kategorie eines Transportmittels basierend auf mindestens einem eines Beschleunigungsmerkmals und eines Magnetometermerkmals, um ein Transportmittelklassifikationsergebnis zu erhalten, wobei das Beschleunigungsmerkmal basierend auf dem Beschleunigungssignal erhalten (S101) wird und das Magnetometermerkmal basierend auf dem Magnetometersignal erhalten wird;
Erhalten eines durch ein Mikrofon in dem elektronischen Gerät erfassten Sprachsignals, und Extrahieren eines Sprachmerkmals basierend auf dem Sprachsignal;
Erkennen einer Sprachsendung während eines Transports basierend auf dem Sprachmerkmal, um ein Sprachsendungserkennungsergebnis zu erhalten; und
Verfeinern der Kategorie des Transportmittels basierend auf dem Transportmittelklassifikationsergebnis und dem Sprachsendungserkennungsergebnis zum Verbessern einer Unterscheidung zwischen Transportmitteln,
wobei Erkennen der Sprachsendung während eines Transports basierend auf dem Sprachmerkmal, um ein Sprachsendungserkennungsergebnis zu erhalten, Folgendes beinhaltet:
Erkennen der Sprachsendung während des Transports basierend auf einer Auftretenshäufigkeit einer Sendung des Sprachsignals und Schwellenwerten einer Auftretenshäufigkeit einer Sendung unterschiedlicher Transportmittel, um das Sprachsendungserkennungsergebnis zu erhalten, wobei das Sprachsendungserkennungsergebnis eine Kategorie eines dem Sprachsignal entsprechenden Transportmittels anzeigt.

2. Verfahren nach Anspruch 1, wobei vor dem Identifizieren das Verfahren ferner Folgendes beinhaltet:
Detektieren, ob sich das elektronische Gerät in einem Transportzustand befindet;
Veranlassen, wenn detektiert wird, dass sich das elektronische Gerät in dem Transportzustand befindet, des elektronischen Geräts, das Transportmittel zu identifizieren, um das Transportmittelklassifikationsergebnis zu erhalten; oder
Fortfahren mit Detektieren, wenn detektiert wird, dass sich das elektronische Gerät in einem Nicht-Transportzustand befindet, ob sich das elektronische Gerät in dem Transportzustand befindet.

3. Verfahren nach Anspruch 2, das ferner Folgendes beinhaltet:
Steuern des Mikrofons in einen Ein- und Auszustand basierend darauf, ob sich das elektronische Gerät in dem Transportzustand befindet;
und/oder
Steuern des Mikrofons in einen Ein- und Auszustand basierend auf einer Transportcode-Pushsituation des elektronischen Geräts;
und/oder
Steuern des Mikrofons in einen Ein- und Auszustand basierend auf einem Betriebsstatus des elektronischen Geräts.

4. Verfahren nach Anspruch 3, wobei das Steuern des Mikrofons in einen Ein- und Auszustand basierend darauf, ob sich das elektronische Gerät in dem Transportzustand befindet, Folgendes beinhaltet:
Einschalten des Mikrofons, wenn detektiert wird, dass sich das elektronische Gerät in dem Transportzustand befindet; oder
Ausschalten des Mikrofons, wenn detektiert wird, dass sich das elektronische Gerät in dem Nicht-Transportzustand befindet.

5. Verfahren nach Anspruch 3 oder 4, wobei das Steuern des Mikrofons in einen Ein- und Auszustand basierend auf einer Transportcode-Pushsituation des elektronischen Geräts Folgendes beinhaltet:
Einschalten des Mikrofons, wenn detektiert wird, dass das elektronische Gerät eine Transportcode-Pushfunktion aktiviert;
Ausschalten des Mikrofons, wenn detektiert wird, dass das elektronische Gerät ein Pushen eines Transportcodes abschließt;
Einschalten des Mikrofons jeden ersten Zeitraum nach Ausschalten des Mikrofons, oder Steuern, nach Ausschalten des Mikrofons, des Mikrofons in einen Ein- und Auszustand basierend darauf, ob sich das elektronische Gerät in dem Transportzustand befindet.

6. Verfahren nach einem der Ansprüche 3 bis 5, wobei das Steuern des Mikrofons in einen Ein- und Auszustand basierend auf einem Betriebsstatus des elektronischen Geräts Folgendes beinhaltet:
Einschalten des Mikrofons, wenn sich das elektronische Gerät in einem Zustand mit eingeschaltetem Bildschirm befindet; oder
Ausschalten des Mikrofons, wenn sich das elektronische Gerät in einem Zustand mit ausgeschaltetem Bildschirm befindet.

7. Verfahren nach einem der Ansprüche 2 bis 6, wobei das Detektieren, ob sich das elektronische Gerät in einem Transportzustand befindet, Folgendes beinhaltet:
Erhalten eines Basisstationssignals, das durch einen Modemprozessor in dem elektronischen Gerät innerhalb eines voreingestellten Zeitraums erfasst wird;
Detektieren (S103), basierend auf dem Basisstationssignal, einer Anzahl an Zellen, die durch das elektronische Gerät innerhalb des voreingestellten Zeitraums durchquert wurden; und
Bestimmen, basierend auf der Anzahl an Zellen, die durch das elektronische Gerät innerhalb des voreingestellten Zeitraums durchquert wurden, ob sich das elektronische Gerät in dem Transportzustand befindet.

8. Verfahren nach einem der Ansprüche 2 bis 6, wobei das Detektieren, ob sich das elektronische Gerät in einem Transportzustand befindet, Folgendes beinhaltet:
Eingeben (S102) des Beschleunigungsmerkmals in ein Künstliche-Intelligenz-Transportzustandsidentifikationsmodell, um einen durch das Künstliche-Intelligenz-Transportzustandsidentifikationsmodell ausgegebenen Transportidentifikator zu erhalten, wobei der Transportidentifikator anzeigt, ob sich das elektronische Gerät in dem Transportzustand oder dem Nicht-Transportzustand befindet, und wobei das Künstliche-Intelligenz-Transportzustandsidentifikationsmodell durch Trainieren basierend auf historischen Beschleunigungsmerkmalen von Transportmitteln unterschiedlicher Kategorien erhalten wird.

9. Verfahren nach einem der Ansprüche 1 bis 8, wobei das Identifizieren Folgendes beinhaltet:
Eingeben mindestens eines des Beschleunigungsmerkmals und des Magnetometermerkmals in ein Künstliche-Intelligenz-Transportmittelklassifikationsmodell, um das durch das Künstliche-Intelligenz-Transportmittelklassifikationsmodell ausgegebene Transportmittelklassifikationsergebnis zu erhalten, wobei das Künstliche-Intelligenz-Transportmittelklassifikationsmodell durch Trainieren basierend auf mindestens einem von historischen Beschleunigungsmerkmalen und historischen Magnetometermerkmalen der Transportmittel unterschiedlicher Kategorien erhalten wird, und wobei das durch das Künstliche-Intelligenz-Transportmittelklassifikationsmodell ausgegebene Transportmittelklassifikationsergebnis Punktzahlen der Transportmittel unterschiedlicher Kategorien anzeigt.

10. Verfahren nach einem der Ansprüche 1 bis 9, wobei Erkennen der Sprachsendung während eines Transports basierend auf dem Sprachmerkmal, um das Sprachsendungserkennungsergebnis zu erhalten, Folgendes beinhaltet:
Eingeben (S109) des Sprachmerkmals in ein Künstliche-Intelligenz-Sprachtyperkennungsmodell, um das durch das Künstliche-Intelligenz-Sprachtyperkennungsmodell ausgegebene Sprachsendungserkennungsergebnis zu erhalten, wobei das Künstliche-Intelligenz-Sprachtyperkennungsmodell durch Trainieren basierend auf historischen Sprachmerkmalen der Transportmittel unterschiedlicher Kategorien erhalten wird und das Sprachsendungserkennungsergebnis eine Kategorie eines dem Sprachmerkmal entsprechenden Transportmittels anzeigt.

11. Verfahren nach einem der Ansprüche 1 bis 9, wobei Erkennen der Sprachsendung während eines Transports basierend auf dem Sprachmerkmal, um das Sprachsendungserkennungsergebnis zu erhalten, Folgendes beinhaltet:
Erkennen der Sprachsendung während eines Transports basierend auf einem Schlüsselinhalt des Sprachsignals und einem voreingestellten Schlüsselinhalt unterschiedlicher Transportmittel, um das Sprachsendungserkennungsergebnis zu erhalten, wobei das Sprachsendungserkennungsergebnis eine Kategorie eines dem Sprachsignal entsprechenden Transportmittels anzeigt.

12. Verfahren nach Anspruch 9, wobei Verfeinern der Kategorie des Transportmittels basierend auf dem Transportmittelklassifikationsergebnis und dem Sprachsendungserkennungsergebnis Folgendes beinhaltet:
Bestimmen (S110), wenn eine Hochgeschwindigkeitsbahnpunktzahl die größte in dem Transportmittelklassifikationsergebnis ist und die Hochgeschwindigkeitsbahnpunktzahl eine erste Schwellenwertbedingung erfüllt, dass das Transportmittel eine Hochgeschwindigkeitsbahn ist;
Bestimmen (S111), wenn eine Metropunktzahl die größte in dem Transportmittelklassifikationsergebnis ist und die Metropunktzahl eine zweite Schwellenwertbedingung erfüllt, dass das Transportmittel eine Metro ist;
Bestimmen, wenn die Metropunktzahl eine dritte Schwellenwertbedingung erfüllt und das Sprachsendungserkennungsergebnis eine Metrosendungssprache ist, dass das Transportmittel die Metro ist;
Bestimmen (S112), wenn eine Bus-/Personenkraftwagenpunktzahl in dem Transportmittelklassifikationsergebnis eine vierte Schwellenwertbedingung erfüllt und das Sprachsendungserkennungsergebnis eine Bussendungssprache ist, dass das Transportmittel ein Bus ist; und
Bestimmen (S113), wenn die Bus-/Personenkraftwagenpunktzahl in dem Transportmittelklassifikationsergebnis die größte ist, die Bus-/Personenkraftwagenpunktzahl eine fünfte Schwellenwertbedingung erfüllt und das Sprachsendungserkennungsergebnis nicht die Bussendungssprache und die Metrosendungssprache ist, dass das Transportmittel ein Personenkraftwagen ist.

13. Verfahren nach Anspruch 12, wobei das Bestimmen, wenn eine Hochgeschwindigkeitsbahnpunktzahl die größte in dem Transportmittelklassifikationsergebnis ist und die Hochgeschwindigkeitsbahnpunktzahl eine erste Schwellenwertbedingung erfüllt, dass das Transportmittel eine Hochgeschwindigkeitsbahn ist, Folgendes beinhaltet:
Bestimmen, wenn die Hochgeschwindigkeitsbahnpunktzahl die größte in dem Transportmittelklassifikationsergebnis ist, die Hochgeschwindigkeitsbahnpunktzahl die erste Schwellenwertbedingung erfüllt und das Basisstationssignal einen Hochgeschwindigkeitsbahnidentifikator beinhaltet, dass das Transportmittel die Hochgeschwindigkeitsbahn ist, wobei das Basisstationssignal durch den Modemprozessor in dem elektronischen Gerät erfasst wird.

14. Elektronisches Gerät, das einen oder mehrere Prozessoren und einen Speicher beinhaltet, wobei der Speicher dazu konfiguriert ist, einen oder mehrere Teile eines Computerprogrammcodes zu speichern, wobei der Computerprogrammcode Computeranweisungen beinhaltet und die Computeranweisungen, wenn sie durch den einen oder die mehreren Prozessoren ausgeführt werden, bewirken, dass das elektronische Gerät das Transportmittelidentifikationsverfahren nach einem der Ansprüche 1 bis 13 durchführt.

## Revendications

1. Procédé d'identification de moyen de transport, le procédé comprenant :
l'obtention d'au moins un signal parmi un signal d'accélération acquis par un capteur d'accélération et un signal de magnétomètre acquis par un capteur de magnétomètre dans un dispositif électronique ;
l'identification d'une catégorie d'un moyen de transport sur la base d'au moins une caractéristique parmi une caractéristique d'accélération et une caractéristique de magnétomètre, pour obtenir un résultat de classification de moyens de transport, la caractéristique d'accélération étant obtenue (S101) sur la base du signal d'accélération, et la caractéristique de magnétomètre étant obtenue sur la base du signal de magnétomètre ;
l'obtention d'un signal vocal acquis par un microphone dans le dispositif électronique, et l'extraction d'une caractéristique vocale sur la base du signal vocal ;
la reconnaissance d'une diffusion vocale pendant le transport sur la base de la caractéristique vocale, pour obtenir un résultat de reconnaissance de diffusion vocale ; et
l'affinement de la catégorie du moyen de transport sur la base du résultat de classification de moyens de transport et du résultat de reconnaissance de diffusion vocale, pour améliorer la distinction entre des moyens de transport,
la reconnaissance de la diffusion vocale pendant le transport sur la base de la caractéristique vocale, pour obtenir un résultat de reconnaissance de diffusion vocale, comprenant :
la reconnaissance de la diffusion vocale pendant le transport sur la base d'une fréquence d'occurrence de diffusion du signal vocal et de seuils de fréquence d'occurrence de diffusion de différents moyens de transport, pour obtenir le résultat de reconnaissance de diffusion vocale, le résultat de reconnaissance de diffusion vocale indiquant une catégorie d'un moyen de transport correspondant au signal vocal.

2. Procédé selon la revendication 1, dans lequel avant l'identification, le procédé comprend en outre :
le fait de détecter le dispositif électronique est dans un état de transport ;
le déclenchement, s'il est détecté que le dispositif électronique est dans l'état de transport, du dispositif électronique pour identifier le moyen de transport, afin d'obtenir le résultat de classification de moyens de transport ; ou
le fait de continuer à détecter, s'il est détecté que le dispositif électronique est dans un état de non-transport, si le dispositif électronique est dans l'état de transport.

3. Procédé selon la revendication 2, comprenant en outre :
le fait de commander la mise en marche et l'arrêt du microphone sur la base du fait que le dispositif électronique est ou non dans l'état de transport ;
et/ou
le fait de commander la mise en marche et l'arrêt du microphone sur la base d'une situation de pousser de code de transport du dispositif électronique ;
et/ou
le fait de commander la mise en marche et l'arrêt du microphone sur la base d'un état de fonctionnement du dispositif électronique.

4. Procédé selon la revendication 3, dans lequel le fait de commander la mise en marche et l'arrêt du microphone sur la base du fait que le dispositif électronique est ou non dans l'état de transport comprend :
la mise en marche du microphone s'il est détecté que le dispositif électronique est dans l'état de transport ; ou
l'arrêt du microphone s'il est détecté que le dispositif électronique est dans l'état de non-transport.

5. Procédé selon la revendication 3 ou la revendication 4, dans lequel le fait de commander la mise en marche et l'arrêt du microphone sur la base d'une situation de pousser de code de transport du dispositif électronique comprend :
la mise en marche du microphone s'il est détecté que le dispositif électronique active une fonction de pousser de code de transport ;
l'arrêt du microphone s'il est détecté que le dispositif électronique achève le pousser d'un code de transport ;
la mise en marche du microphone à chaque première période de temps après l'arrêt du microphone, ou la commande, après l'arrêt du microphone, de la mise en marche et de l'arrêt du microphone sur la base du fait que le dispositif électronique est dans l'état de transport.

6. Procédé selon l'une quelconque des revendications 3 à 5, dans lequel le fait de commander la mise en marche et l'arrêt du microphone sur la base d'un état de fonctionnement du dispositif électronique comprend :
la mise en marche du microphone si le dispositif électronique est dans un état d'écran allumé ; ou
l'arrêt du microphone si le dispositif électronique est dans un état d'écran éteint.

7. Procédé selon l'une quelconque des revendications 2 à 6, dans lequel le fait de détecter si le dispositif électronique est dans un état de transport comprend :
l'obtention d'un signal de station de base acquis par un processeur modem dans le dispositif électronique au sein d'une période de temps prédéfinie ;
la détection (S103), sur la base du signal de station de base, d'une quantité de cellules passées par le dispositif électronique au sein de la période de temps prédéfinie ; et
le fait de déterminer, sur la base de la quantité de cellules passées par le dispositif électronique au sein de la période de temps prédéfinie, si le dispositif électronique est dans l'état de transport.

8. Procédé selon l'une quelconque des revendications 2 à 6, dans lequel le fait de détecter si le dispositif électronique est ou non dans un état de transport comprend :
l'entrée (S102) de la caractéristique d'accélération dans un modèle d'identification d'état de transport d'intelligence artificielle pour obtenir un identifiant de transport fourni en sortie par le modèle d'identification d'état de transport d'intelligence artificielle, l'identifiant de transport indiquant si le dispositif électronique est dans l'état de transport ou l'état de non-transport, et le modèle d'identification d'état de transport d'intelligence artificielle étant obtenu par apprentissage sur la base de caractéristiques d'accélération historiques de moyens de transport de différentes catégories.

9. Procédé selon l'une quelconque des revendications 1 à 8, dans lequel l'identification comprend en outre :
l'entrée d'au moins une caractéristique parmi une caractéristique d'accélération et une caractéristique de magnétomètre dans un modèle de classification de moyens de transport d'intelligence artificielle pour obtenir le résultat de classification de moyens de transport fourni en sortie par le modèle de classification de moyens de transport d'intelligence artificielle, le modèle de classification de moyens de transport d'intelligence artificielle étant obtenu par apprentissage sur la base d'au moins un type de caractéristiques parmi des caractéristiques d'accélération historiques et des caractéristiques de magnétomètre historiques du moyen de transport de différentes catégories, et le résultat de classification de moyens de transport fourni en sortie par le modèle de classification de moyens de transport d'intelligence artificielle indiquant des scores du moyen de transport de différentes catégories.

10. Procédé selon l'une quelconque des revendications 1 à 9, dans lequel la reconnaissance de la diffusion vocale pendant le transport sur la base de la caractéristique vocale, pour obtenir le résultat de reconnaissance de diffusion vocale, comprend :
l'entrée (S109) de la caractéristique vocale dans un modèle de reconnaissance de type vocal d'intelligence artificielle pour obtenir le résultat de reconnaissance de diffusion vocale fourni en sortie par le modèle de reconnaissance de type vocal d'intelligence artificielle, le modèle de reconnaissance de type vocal d'intelligence artificielle étant obtenu par apprentissage sur la base de caractéristiques vocales historiques du moyen de transport de différentes catégories, et le résultat de reconnaissance de diffusion vocale indiquant une catégorie d'un moyen de transport correspondant à la caractéristique vocale.

11. Procédé selon l'une quelconque des revendications 1 à 9, dans lequel la reconnaissance de la diffusion vocale pendant le transport sur la base de la caractéristique vocale, pour obtenir le résultat de reconnaissance de diffusion vocale, comprend :
la reconnaissance de la diffusion vocale pendant le transport sur la base d'un contenu clé du signal vocal et d'un contenu clé prédéfini de différents moyens de transport, pour obtenir le résultat de reconnaissance de diffusion vocale, le résultat de reconnaissance de diffusion vocale indiquant une catégorie d'un moyen de transport correspondant au signal vocal.

12. Procédé selon la revendication 9, dans lequel l'affinement de la catégorie du moyen de transport sur la base du résultat de classification de moyens de transport et du résultat de reconnaissance de diffusion vocale comprend :
la détermination (S110), si un score de chemin de fer à grande vitesse est le plus grand dans le résultat de classification de moyens de transport, et que le score de chemin de fer à grande vitesse satisfait une première condition de seuil, que le moyen de transport est un chemin de fer à grande vitesse ;
la détermination (5111), si un score de métro est le plus grand dans le résultat de classification de moyens de transport, et que le score de métro satisfait une deuxième condition de seuil, que le moyen de transport est un métro ;
la détermination, si le score de métro satisfait une troisième condition de seuil, et que le résultat de reconnaissance de diffusion vocale est une voix de diffusion de métro, que le moyen de transport est le métro ;
la détermination (S112), si un score de bus/voiture dans le résultat de classification de moyens de transport satisfait une quatrième condition de seuil, et que le résultat de reconnaissance de diffusion vocale est une voix de diffusion de bus, que le moyen de transport est un bus ; et
la détermination (S113), si le score de bus/voiture dans le résultat de classification de moyens de transport est le plus grand, que le score de bus/voiture satisfait une cinquième condition de seuil, et que le résultat de reconnaissance de diffusion vocale n'est pas la voix de diffusion de bus ni la voix de diffusion de métro, que le moyen de transport est une voiture.

13. Procédé selon la revendication 12, dans lequel la détermination, si un score de chemin de fer à grande vitesse est le plus grand dans le résultat de classification de moyens de transport, et que le score de chemin de fer à grande vitesse satisfait une première condition de seuil, que le moyen de transport est un chemin de fer à grande vitesse, comprend :
la détermination, si le score de chemin de fer à grande vitesse est le plus grand dans le résultat de classification de moyens de transport, que le score de chemin de fer à grande vitesse satisfait la première condition de seuil, et que le signal de station de base comprend un identifiant de chemin de fer à grande vitesse, que le moyen de transport est le chemin de fer à grande vitesse, le signal de station de base étant acquis par le processeur modem dans le dispositif électronique.

14. Dispositif électronique, comprenant un ou plusieurs processeurs et une mémoire, dans lequel la mémoire est configurée pour stocker un ou plusieurs éléments de code de programme informatique, le code de programme informatique comprend des instructions informatiques, et les instructions informatiques, lorsqu'elles sont exécutées par les un ou plusieurs processeurs, amènent le dispositif électronique à réaliser le procédé d'identification de moyen de transport selon l'une quelconque des revendications 1 à 13.
